# EUROPÄISCHE PATENTSCHRIFT

(11) **EP 2 187 175 B1**
(45) Veröffentlichungstag und Bekanntmachung des Hinweises auf die Patenterteilung: **09.04.2014**
(21) Anmeldenummer: 09014162.3
(22) Anmeldetag: 12.11.2009
(51) Int. Cl.: G01D 5/244

(54) **Messumformer**
Measuring transducer
Convertisseur de mesure

(30) Priorität: 14.11.2008 DE 102008057474
(43) Veröffentlichungstag der Anmeldung: 19.05.2010
(73) Patentinhaber: KG transmitter components GmbH, 32547 Bad Oeynhausen (DE)
(72) Erfinder: Galinski, Udo, 32754 Porta Westfalica (DE)
(74) Vertreter: Gesthuysen Patent- und Rechtsanwälte

(56) Entgegenhaltungen:
- DE-A1- 4 413 098
- DE-A1- 19 513 081
- DE-A1- 19 520 299
- DE-A1- 19 855 358
- US-A1- 2002 093 444

## Beschreibung

Die Erfindung betrifft einen Meßumformer zur Umformung wenigstens eines an einem ersten Eingang anliegenden Eingangssignals in ein korrespondierendes über wenigstens einen ersten Ausgang ausgebbares elektrisches Ausgangssignal, wobei das Eingangssignal über einen analogen Übertragungspfad zu einem analogen Umformersignal verarbeitbar ist.

Meßumformer der vorgenannten Art sind seit längerem bekannt und dienen ganz allgemein dazu, das von einem Sensorelement stammende Sensorsignal als Eingangssignal zu erfassen und in ein - meist standardisiertes - Signal als elektrisches Ausgangssignal umzusetzen, damit es beispielsweise von einer übergeordneten Prozeßüberwachung verwendet werden kann.

Der Begriff Meßumformer ist hier nicht in irgendeiner Weise einschränkend zu verstehen. Bei dem Eingangssignal und dem Ausgangssignal kann es sich um die gleichen aber auch um verschiedene physikalische Größen handeln, üblicherweise handelt es sich bei dem Eingangssignal jedenfalls auch um ein elektrisches Signal. Dieses elektrische Signal kann von dem an den Eingang des Meßumformers angeschlossenen Sensorelement aktiv bereitgestellt werden, genausogut kann das angeschlossene Sensorelement aber auch von dem Meßumformer mit Energie gespeist werden, so daß sich erst durch dieses Zusammenwirken das eigentliche elektrische Eingangssignal ergibt. Weit verbreitet ist bei Meßumformern, daß der Ausgang als Stromschnittstelle ausgestaltet ist, bei der die Größe des erfassten und zu übermittelnden Meßwertes durch Ströme von 4 mA bis 20 mA kodiert werden; dies ist insbesondere häufig bei sogenannten Zwei-Leiter-Geräten der Fall, die ihre Energieversorgung über die Stromschnittstelle beziehen.

Wenn davon die Rede ist, daß das sensorseitige Eingangssignal über einen "analogen Übertragungspfad" zu einem analogen Umformersignal verarbeitbar ist, dann ist damit eine schaltungsmäßig in analoger Technik gehaltene Realisierung des Übertragungspfades gemeint, bei der die Umformung des Eingangssignals zu dem analogen Umformersignal ohne zeitlich und/oder wertemäßig quantisierende Zwischenschritte im Sinne der Digitaltechnik auskommt. Die schaltungstechnische Realisierung kann sowohl in diskreter als auch in integrierter Form erfolgen. Als analoger Übertragungspfad werden auch solche Schaltungen angesehen, die zwar im schaltungstechnischen Sinne digitale Komponenten enthalten, diese digitalen Komponenten aber nicht dem analogen Übertragungspfad des Eingangssignals zum analogen Umformersignal zwischengeschaltet sind, sondern beispielsweise nur zur Parametrierung der analogen Schaltung dienen. Die in diesem Sinne rein analog realisierten Übertragungspfade haben den Vorteil, daß sie aufgrund der verwendeten Technologie sehr schnell sind, das analoge Umformersignal also praktisch verzögerungsfrei dem sich ändernden Eingangssignal folgt.

Aus dem Stand der Technik sind auch solche Meßumformer bekannt, die an Stelle eines analogen Übertragungspfades über einen digitalen Übertragungspfad verfügen, bei dem das Eingangssignal schaltungstechnisch mit digitalen Mitteln - also durch zeitliche und/oder wertemäßige Quantisierung - in ein digitales Umformersignal umgeformt wird. Zur Realisierung derartiger digitaler Übertragungspfade werden meist einfache Mikrocontroller verwendet, die bereits die notwendigen Funktionalitäten und Schnittstellen zur Signalverarbeitung aufweisen, wie z.B. Multiplexer, Digital-Analog-Wandler, Analog-Digital-Wandler, programmierbare Verstärker, programmierbare Stromausgänge und serielle Schnittstellen.

Die Reaktionszeiten von digital realisierten Meßumformern bzw. von Meßumformern mit einem digitalen Übertragungspfad sind gegenüber den Reaktionszeiten von analogen Übertragungspfaden ausgesprochen groß, sie können insbesondere zur Erfassung von schnellveränderlichen Prozeßgrößen bei sicherheitsrelevanten Anwendungen weitaus größer als die maximal gestatteten Totzeiten sein. Der Vorteil von Meßumformern mit digitalem Übertragungspfad besteht darin, daß sich mit ihnen eine erheblich höhere Genauigkeit bei der Umformung des Eingangssignals in ein Umformersignal erzielen lassen, als dies bei der Realisierung des Übertragungspfades in analoger Schaltungstechnik möglich ist.

Unabhängig davon, welche der aus dem Stand der Technik bekannten Meßumformer zur Lösung einer Meßaufgabe verwendet werden, besteht bei sicherheitstechnischen Anwendungen die Erfordernis, redundante Ausweichsysteme bereitzustellen. Diese Redundanzen werden dann üblicherweise durch Verwendung mehrerer paralleler Meßumformer hergestellt, was mit hohen Kosten verbunden ist, technisch aufwendig ist und den Konflikt zwischen analog oder digital implementierten Schaltungsvarianten nicht auflöst.

Aufgabe der vorliegenden Erfindung ist es, einen Meßumformer anzugeben, der eine schnelle Wandlung des Eingangssignals in ein entsprechendes Ausgangssignal bei hoher Genauigkeit gestattet und der vorzugsweise auch für Anwendungen mit erhöhten Sicherheitsanforderungen geeignet ist.

Die zuvor hergeleitete und beschriebene Aufgabe ist erfindungsgemäß bei einem Meßumformer der oben angegeben Art dadurch gelöst, daß das Eingangssignal zusätzlich über einen separaten digitalen Übertragungspfad zu einem digitalen Umformersignal verarbeitbar ist, wobei das analoge Umformersignal und das digitale Umformersignal von einer Auswerteeinheit ausgewertet werden und die Auswerteeinheit das elektrische Ausgangssignal entweder auf Basis des analogen Umformersignals oder auf Basis des digitalen Umformersignals generiert. Dies impliziert, daß der analoge Übertragungspfad und der digitale Übertragungspfad gleichzeitig mit dem Eingangssignal beaufschlagt werden und gleichzeitig das jeweils mit dem Eingangssignal korrespondierende Umformersignal erzeugen.

Der erfindungsgemäß ausgestaltete Meßumformer ist in vielerlei Hinsicht ausgesprochen vorteilhaft. Dadurch, daß in dem Meßumformer neben dem analogen Übertragungspfad zusätzlich ein separater digitaler Übertragungspfad vorhanden ist, über den das Eingangssignal simultan verarbeitbar ist, wird in einem einzigen Meßumformer bereits eine Redundanz für sicherhcitsrelevante Anwendungen geschaffen. Es wird jedoch nicht nur einfach ein Übertragungspfad im Meßumformer doppelt vorgesehen, sondern es werden zwei in unterschiedlichen Technologien realisierte Übertragungspfade parallel nebeneinander betrieben, so daß durch diesen diversitären Aufbau insbesondere systematische Fehler, die andernfalls auch durch redundante Anordnungen nicht ausgeschlossen werden können, mit der erfindungsgemäßen Anordnung grundsätzlich erfaßbar und vermeidbar sind. Wesentlich ist, daß bei dem erfindungsgemäßen Meßumformer nicht etwa nur das Ergebnis des einen Übertragungspfades zur Korrektur des Ergebnisses des anderen Übertragungspfades herangezogen wird, sondern daß sowohl das analoge Umformersignal als auch das digitale Umformersignal von einer erfindungsgemäß vorgesehenen Auswerteeinheit ausgewertet werden und das Ausgangssignal dann entweder auf Basis des analogen Umformersignals oder auf Basis des digitalen Umformersignals generiert wird. Durch geschickte Ausgestaltung der Auswerteeinheit ist es dann, wie nachfolgend gezeigt wird, möglich, die Vorteile der diversitär eingesetzten Technologien in den Übertragungspfaden zu nutzen und die Nachteile der diversitär eingesetzten Technologien - wenn auch nicht wechselseitig vollkommen auszuschließen, so doch aber - auf ein Mindestmaß zu reduzieren.

Wenn gesagt ist, daß die Auswerteeinheit das elektrische Ausgangssignal "generiert", dann bedeutet das nicht zwingend, daß das Ausgangssignal unter Energieeinsatz der Auswerteeinheit erzeugt wird, es kann sich dabei auch um ein simples Durchschalten handeln, wenn das von der Auswerteeinheit aufgenommene Signal dazu geeignet ist.

Gemäß einer bevorzugten Ausgestaltung der Erfindung ist vorgesehen, daß die Auswerteeinheit durch Vergleich des analogen Umformersignals mit dem digitalen Umformersignal einen Vergleichswert ermittelt und bei Überschreitung eines ersten Vergleichsschwellwertes durch den Vergleichswert auf Basis des analogen Umformersignals das elektrische Ausgangssignal generiert. Diese Ausgestaltung des erfindungsgemäßen Meßumformers trägt der Tatsache Rechnung, daß das analoge Umformersignal dem anliegenden Eingangssignal deutlich zeitnäher folgt als das digitale Umformersignal und daher - die ordnungsgemäße Funktion des Meßumformers insgesamt vorausgesetzt - ein von Null abweichender Vergleichswert, der üblicherweise durch die Differenz oder den Differenzbetrag von analogem Umformersignal und digitalem Umformersignal gegeben ist, auf verschieden schnellem Nachfolgen der verglichenen Umformersignale beruht. In diesen Fällen ist das analoge Umformersignal, obwohl es insgesamt ungenauer ist als das digitale Umformersignal, ein besseres Abbild des Eingangssignals als das digitale Umformersignal und wird daher der Generierung des elektrischen Ausgangssignals zugrundegelegt.

Ein Unterschied zwischen dem aus dem analogen Übertragungspfad stammenden analogen Umformersignal und dem elektrischen Ausgangssignal kann beispielsweise darin bestehen, daß das analoge Umformersignal noch nicht signalangepaßt bzw. standardisiert ist. Durch den analogen Übertragungspfad kann der Meßbereich zum Beispiel auf ein analoges Umformersignal im Bereich von 1 V bis 2 V Gleichspannung abgebildet werden, und das elektrische Ausgangssignal kann beispielsweise ein standardisiertes Stromsignal sein, das den Wertebereich des Meßumformers auf einen Strom im Bereich von 4 mA bis 20 mA abbildet; in diesem Fall ist also ein Spannungs-Strom-Konverter zwischen dem analogen Übertragungspfad und dem ersten Ausgang vorgesehen.

In einer bevorzugten Ausgestaltung der Erfindung ist der Vergleichswert kein konstanter Wert, sondern er ist selbst eine Funktion des analogen Umformersignals, beispielsweise ein fester Teil des analogen Umformersignals. Wenn beispielsweise die Meßurisicherheit bei dem analogen Umformersignal bei einem Prozent bezogen auf den Meßwert liegt, ist es sinnvoll, den Vergleichsschwellwert im Bereich dieses Fehlers oder sogar größer zu wählen und zwar in eben dieser Abhängigkeit vom Wert des analogen Umformersignals.

Wenn hier davon die Rede ist, daß die Auswerteeinheit das analoge Umformersignal mit dem digitalen Umformersignal vergleicht, dann ist dies funktional zu verstehen und nicht streng physikalisch, da das analoge Umformersignal und das digitale Umformersignal üblicherweise nicht direkt als physikalische Signale miteinander verglichen werden können, sondern es vielmehr vorher der Interpretation der physikalischen Signale bedarf, um eine gemeinsame Vergleichsbasis zu schaffen.

Bei einer weiteren bevorzugten Ausgestaltung der Erfindung ist vorgesehen, daß die Auswerteeinheit durch Vergleich des analogen Umformersignals mit dem digitalen Umformersignal einen Vergleichswert ermittelt und bei Unterschreitung eines zweiten Vergleichsschwellwertes durch den Vergleichswert auf Basis des digitalen Umformersignals das elektrische Ausgangssignal generiert. Dieser Ausgestaltung der Erfindung liegt wiederum die zuvor beschriebene Erkenntnis zugrunde, daß bei fehlerfreier Funktion des Meßumformers eine Abweichung des analogen Umformersignals von dem digitalen Umformersignal - jenseits der Fehlergrenze - nur dann vorliegen kann, wenn das Eingangssignal schnell veränderlich ist, genauer, so schnell veränderlich ist, daß der digitale Übertragungspfad nicht "folgen" kann. Im Umkehrschluß sind dann ähnliche Umformersignale gleichbedeutend mit einem nur langsam veränderlichen - oder stationären - Eingangssignal, weshalb das digitale Umformersignal dann den Vorteil der höheren Genauigkeit gegenüber dem analogen Umformersignal aufweist; dem digitalen Umformersignals ist daher in dieser Situation der Vorzug zu geben. Bevorzugt wird der zweite Vergleichsschwellwert kleiner gewählt als der erste Vergleichsschwellwert, weil damit insgesamt ein Hystereseeffekt erzielt wird und der Meßumformer durch die wertemäßige Beabstandung der Umschaltschwellen ein stabiles Ausgangsverhalten zeigt.

In einer Weiterentwicklung des erfindungsgemäßen Meßumformers ermittelt die Auswerteeinheit durch Vergleich des analogen Umformersignals mit dem digitalen Umformersignal wiederum einen Vergleichswert, wobei bei Überschreitung eines dritten Vergleichsschwellwertes durch den Vergleichswert ein Alarmsignal generiert wird, das vorzugsweise über einen zweiten Ausgang des Meßumformers ausgebbar ist. In einer Weiterentwicklung dieser Variante des Meßumformers wird das Alarmsignal nur dann generiert, wenn wenigstens das analoge Umformersignal oder das digitale Umformersignal eine Änderungsgeschwindigkeit unterhalb einer zuvor festgesetzten Mindeständerungsgeschwindigkeit aufweist. Dadurch wird sichergestellt, daß die Überschreitung des Vergleichsschwellwertes nicht lediglich durch einen Übergarigsvorgang - also ein transientes Eingangssignal - verursacht worden ist, sondern vielmehr tatsächlich eine Fehlersituation vorliegt.

In diesem Zusammenhang ist bei einer weiteren bevorzugten Ausgestaltung des erfindungsgemäßen Meßumformers vorgesehen, daß die Auswerteeinheit die Änderungsgeschwindigkeit des analogen Umformersignals und/oder des digitalen Umformersignals ermittelt und in Abhängigkeit von dem ermittelten Wert für die Änderungsgeschwindigkeit bzw. in Abhängigkeit von den ermittelten Werten für die Änderungsgeschwindigkeiten das elektrische Ausgangssignal generiert. Unter den beschriebenen Voraussetzungen - schneller analoger Übertragungspfad, langsamerer digitaler Übertragungspfad - ist es vorteilhaft, wenn die Änderungsgeschwindigkeit des analogen Umformersignals ermittelt wird und bei Überschreitung eines Änderungsgeschwindigkeitsschwellwertes durch die ermittelte Änderungsgeschwindigkeit das elektrische Ausgangssignal auf Basis des analogen Umfomersignals generiert wird.

Die Fehlersicherheit bzw. Fehlererkennbarkeit bei dem erfindungsgemäßen Meßumformer läßt sich bei einer bevorzugten Ausgestaltung dadurch noch wesentlich erhöhen, daß das analoge Umformersignal dem digitalen Übertragungspfad zugeleitet wird, im digitalen Übertragungspfad durch Vergleich des analogen Umformersignals mit dem digitalen Umformersignal ein weiterer Vergleichswert ermittelt und der weitere Vergleichswert der Auswerteeinheit zugeleitet wird. Diese Maßnahme erfordert bei Einsatz von Standard-Bauelementen für den digitalen Übertragungspfad keinen zusätzlichen schaltungstechnischen Aufwand, aber es wird durch den zusätzlich ermittelten weiteren Vergleichswert die Möglichkeit geschaffen, einen Fehler der Auswerteeinheit zu erkennen, nämlich wenn die Auswerteeinheit den weiteren, aus dem digitalen Übertragungspfad stammenden Vergleichswert mit dem in der Auswerteeinheit selbst gebildeten Vergleichswert vergleicht und den so ermittelten Vergleichs-Vergleichswert zur Diagnose des Meßumformers, insbesondere zur Selbstdiagnose heranzieht. Dies ist eine ausgesprochen preiswerte Variante zur Überprüfung der Auswerteeinheit selbst.

Bei einer anderen Variante des erfindungsgemäßen Meßumformers, die ebenfalls eine Fehlererkennung der Auswerteeinheit ermöglicht, ist vorgesehen, wenigstens eine weitere Auswerteeinheit zu realisieren, wobei die weitere Auswerteeinheit die Funktionalität der zuvor beschriebenen Auswerteeinheit aufweist, wobei die beiden Auswerteeinheiten sich wechselseitig die ermittelten Auswertedaten - konkret die ermittelten Vergleichswerte - zuleiten und so ohne weiteres ein fehlerhaftes Verhalten wenigstens einer der Auswerteeinheiten durch voneinander abweichende Auswertedaten feststellbar ist.

Im einzelnen gibt es nun eine Vielzahl von Möglichkeiten, den erfindungsgemäßen Meßumformer auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig.1: eine schematische, im wesentlichen die funktionalen Wirkzu- sammenhänge anhand eines Blockschaltbilds verdeutlichende Darstellung eines erfindungsgemäßen Meßumformers,
- Fig. 2: eine schematische Darstellung eines weiteren Ausführungsbei- spiels eines erfindungsgemäßen Meßumformers mit einer Über- tragung des analogen Umformersignals in den digitalen Übertra- gungspfad und
- Fig. 3: eine schematische Darstellung eines weiteren Ausfiihrungsbei- spiels des erfindungsgemäßen Meßumformers unter Verwendung einer zusätzlichen Beeinflussungsgröße zur Kompensation von Umgebungseinflüssen.

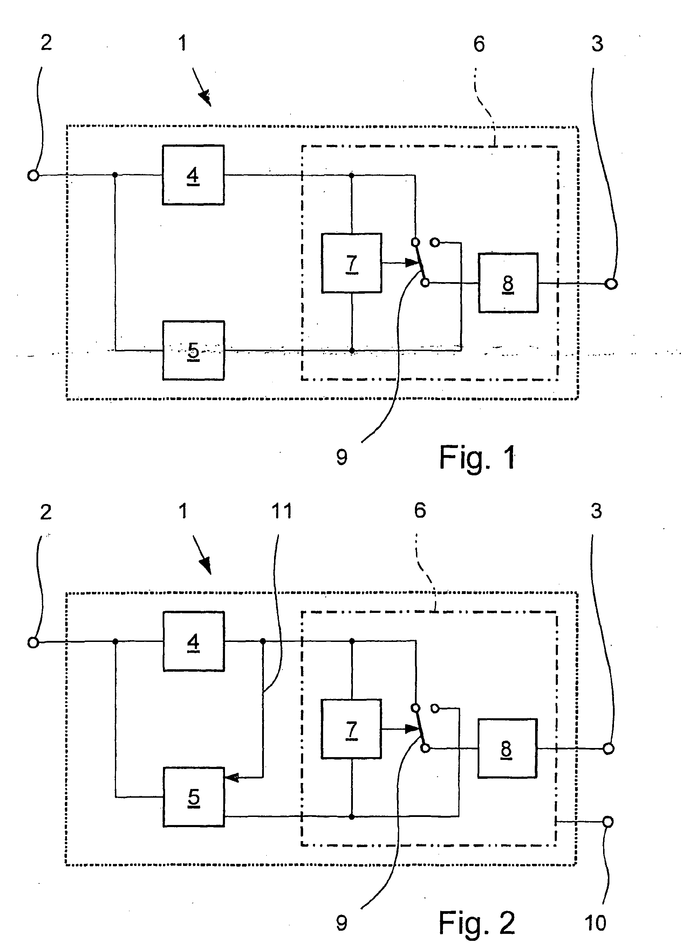

In den Fig. 1 bis 3 sind jeweils verschiedene Ausführungsbeispiele eines Meßumformers 1 dargestellt, wobei die Figuren keine Darstellungen im Sinne von korrekten elektrischen Schaltplänen sind, sondern vielmehr die Wirkzusammenhänge zwischen den verschiedenen Bestandteilen des Meßumformers 1 erkennbar werden lassen sollen.

Die dargestellten Meßumformer 1 dienen der Umformung eines an einem ersten Eingang 2 anliegenden Eingangssignals in ein korrespondierendes über wenigstens einen ersten Ausgang 3 ausgebbares elektrisches Ausgangssignal, wobei das Eingangssignal über einen analogen Übertragungspfad 4 zu einem analogen Umformersignal verarbeitbar ist. Bei allen dargestellten Meßumformern 1 wird das Eingangssignal zusätzlich über einen separaten digitalen Übertragungspfad 5 zu einem digitalen Umformersignal verarbeitet, wobei das analoge Umformersignal und das digitale Umformersignal dann von einer Auswerteeinheit 6 ausgewertet werden, und die Auswerteeinheit 6 das elektrische Ausgangssignal entweder auf Basis des analogen Umformersignals oder auf Basis des digitalen Umformersignals generiert. Wenn hier lediglich ein erster Eingang 2 und ein erster Ausgang 3 dargestellt sind, dann ist auch diese Darstellung wiederum schematisch zu verstehen, wobei dem Fachmann klar ist, daß beispielsweise ein elektrisches Spannungs-Eingangssignal nur in bezug auf ein Bezugspotential richtig erkannt werden kann, was hier jedoch nicht explizit dargestellt ist.

In den dargestellten Ausführungsbeispielen ist in der Auswerteeinheit 6 ein Komparator 7 realisiert, der das analoge Umformersignal und das digitale Umformersignal miteinander vergleicht und in Abhängigkeit von dem Vergleich entweder das analoge Umformersignal oder aber das digitale Umformersignal dem Ausgang 3 über einen Konverter 8 zuleitet. Die alternative Verwendung entweder des analogen Umformersignals oder des digitalen Umformersignals ist in den Fig. 1 bis 3 symbolisiert durch einen Schalter 9, der die alternative Verwendung der beiden Umformersignale realisiert; wie der Schalter 9 technologisch realisiert ist, ist von untergeordneter Bedeutung. Die Auswerteeinheit 6 ist in dem hier dargestellten Ausführungsbeispiel insgesamt als integrierter Schaltkreis realisiert.

Die Auswerteeinheit 6 vergleicht in den hier dargestellten Ausführungsbeispielen das analoge Umformersignal mit dem digitalen Umformersignal und ermittelt dadurch einen Vergleichswert, nämlich schlicht den Differenzwert zwischen den beiden Umformersignalen, wobei die Umformersignale vor dem Vergleich interpretiert werden, da das digitale Umformersignal und das analoge Umformersignal vorliegend nicht auf physikalischer Signalebene direkt miteinander verglichen werden können.

Der Auswerteeinheit 6 ist ein erster Vergleichsschwellwert vorgegeben, wobei bei Überschreitung dieses ersten Vergleichsschwellwerts durch den Vergleichswert das elektrische Ausgangssignal auf Basis des analogen Umformersignals generiert wird. Dies berücksichtigt den Umstand, daß ein von Null verschiedener Vergleichswert - Differenzwert - nur dann auftreten kann, wenn sich das Eingangssignal schnell ändert und daher der prinzipbedingte Unterschied zwischen dem analogen Umformersignal und dem digitalen Umformersignal zu Tage tritt.

Bei den dargestellten Meßumformern ist ebenfalls realisiert, daß die Auswerteeinheit 6 durch Vergleich des analogen Umformersignals mit dem digitalen Umformersignal - wie bereits ausgefiihrt - einen Vergleichswert ermittelt und bei Unterschreitung eines zweiten vorgegebenen Vergleichsschwellwertes durch den Vergleichswert auf Basis des digitalen Umformersignals das elektrische Ausgangssignal generiert, wobei vorliegend der zweite Vergleichsschwellwert kleiner ist als der erste Vergleichsschwellwert und damit ein Hystereseeffekt erzielt wird, das Ausgangssignal also auch bei Vergleichswerten im Bereich eines der beiden Vergleichsschwellwerte nicht durch ständiges Umschalten zwischen analogem Umformersignal und digitalem Umformersignal ruhig bleibt.

Die in Fig. 2 dargestellte Auswerteeinheit 6 ist so ausgestaltet, daß durch Vergleich des analogen Umformersignal mit dem digitalen Umformersignal wiederum ein Vergleichswert ermittelt wird und bei Überschreitung eines dritten vorgegebenen Vergleichsschwellwertes durch den Vergleichswert ein Alarmsignal generiert wird, wobei das Alarmsignal über einen zweiten Ausgang 10 ausgebbar ist und von einem angeschlossenen Gerät abgegriffen werden kann.

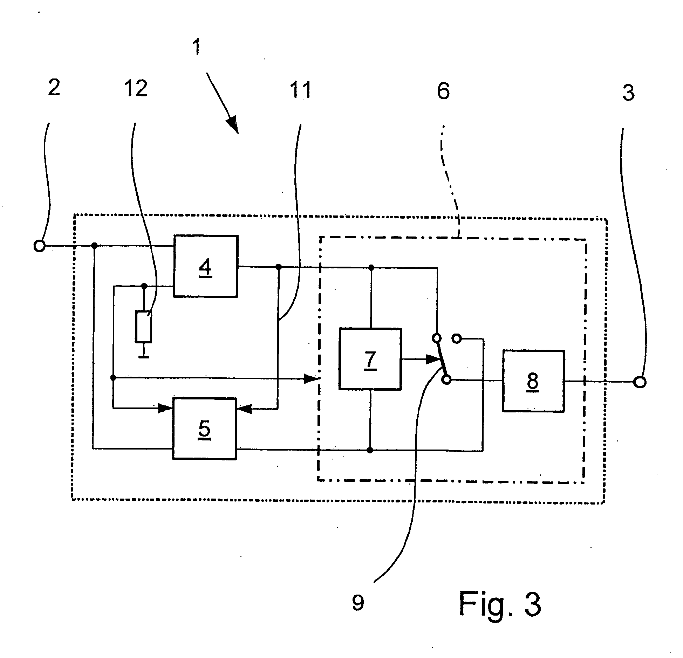

Bei dem in Fig. 3 dargestellten Meßumformer 1 ist vorgesehen, daß die Auswerteeinheit 6 die Änderungsgeschwindigkeit des analogen Umformersignals ermittelt und in Abhängigkeit von dem ermittelten Wert das elektrische Ausgangssignal generiert, vorliegend nämlich bei Überschreitung eines Änderungsgeschwindigkeitsschwellwertes durch die ermittelte Änderungsgeschwindigkeit des analogen Umformersignals das elektrische Ausgangssignal auf Basis des analogen Umformersignals generiert.

Bei dem in Fig. 2 dargestellten Meßumformer 1 ist eine zusätzliche Überprüfungsmöglichkeit der Funktionalität der Auswerteeinheit 6 dadurch gegeben, daß das analoge Umformersignal dem digitalen Übertragungspfad 5 zugeleitet wird, symbolisiert durch Signalpfad 11, im digitalen Übertragungspfad 5 durch Vergleich des analogen Umformersignals mit dem digitalen Umformersignal ein weiterer Vergleichswert ermittelt und der weitere Vergleichswert der Auswerteeinheit 6 zugeleitet wird, wobei die Auswerteeinheit 6 den weiteren, aus dem digitalen Übertragungspfad stammenden Vergleichswert mit dem in der Auswerteeinheit selbst gebildeten Vergleichswert vergleicht und den so ermittelten Vergleichs-Vergleichswert zur Diagnose des Meßumformers 1, hier zur Diagnose der Auswerteeinheit 6 selbst, heranzieht. In Fig. 2 ist nicht durch einen separaten Signalpfad dargestellt, daß der weitere Vergleichswert der Auswerteeinheit 6 zugeleitet wird, da es sich bei der Verbindung zwischen dem digitalen Übertragungspfad und der Auswerteeinheit 6 hier ohnehin um eine digitale Schnittstelle handelt, über die beliebige Informationen übertragbar sind.

In Fig. 3 ist zusätzlich dargestellt, daß im analogen Übertragungspfad 4 und im digitalen Übertragungspfad 5 der Wert einer zur Kompensation von Umgebungseinflüssen benötigte Beeinflussungsgröße - vorliegend die Temperatur - bereitgestellt und zur Kompensation des analogen Umformersignals und des digitalen Umformersignal verwendet wird. Im vorliegenden Fall ist an den analogen Übertragungspfad 4 ein Temperaturmeßwiderstand 12 angeschlossen, der von einer von dem analogen Übertragungspfad 4 umfaßten, im einzelnen nicht dargestellten Konstantstromquelle gespeist wird, wobei der Spannungsabfall an dem Temperaturmeßwiderstand 12 sowohl im analogen Übertragungspfad 4 als auch im digitalen Übertragungspfad 5 bereits zur Kompensation des Temperatureinflusses verwendet wird. Darüber hinaus wird im Meßumformer 1 gemäß Fig. 3 auch der Auswerteeinheit 6 der Wert dieser Beeinflussungsgröße - nämlich der Wert der Temperatur - bereitgestellt und zur Kompensation des Temperatureinflusses auf das analogen Umformersignal und das digitalen Umformersignal verwendet.

In allen dargestellten Ausführungsbeispielen ist der Ausgang 3 durch eine normierte Ausgangs-Stromschnittstelle realisiert.

## Patentansprüche

1. Meßumformer zur Umformung eines an einem ersten Eingang (2) anliegenden Eingangssignals in ein korrespondierendes über wenigstens einen ersten Ausgang (3) ausgebbares elektrisches Ausgangssignal, wobei das Eingangssignal über einen analogen Übertragungspfad (4) zu einem analogen Umformersignal verarbeitbar ist,
**dadurch gekennzeichnet,**
**daß** das Eingangssignal zusätzlich über einen separaten digitalen Übertragungspfad (5) zu einem digitalen Umformersignal verarbeitbar ist, wobei das analoge Umformersignal und das digitale Umformersignal von einer Auswerteeinheit (6) ausgewertet werden und die Auswerteeinheit (6) das elektrische Ausgangssignal entweder auf Basis des analogen Umformersignals oder auf Basis des digitalen Umformersignals generiert.

2. Meßumformer nach Anspruch 1, **dadurch gekennzeichnet, daß** die Auswerteeinheit (6) durch Vergleich des analogen Umformersignals mit dem digitalen Umformersignal einen Vergleichswert ermittelt und bei Überschreitung eines ersten Vergleichsschwellwertes durch den Vergleichswert auf Basis des analogen Umformersignals das elektrische Ausgangssignal generiert.

3. Meßumformer nach Anspruch 1 oder 2, **dadurch gekennzeichnet, daß** die Auswerteinrichtung (6) durch Vergleich des analogen Umformersignals mit dem digitalen Umformersignal einen Vergleichswert ermittelt und bei Unterschreitung eines zweiten Vergleichsschwellwertes durch den Vergleichswert auf Basis des digitalen Umformersignals das elektrische Ausgangssignal generiert, insbesondere wobei der zweite Vergleichsschwellwert kleiner als der erste Vergleichsschwellwert ist, so daß ein Hystereseeffekt erzielt wird.

4. Meßumformer nach einem der Ansprüche 1 bis 3, **dadurch gekennzeichnet, daß** die Auswerteeinheit durch Vergleich des analogen Umformersignals mit dem digitalen Umformersignal einen Vergleichswert ermittelt und bei Überschreitung eines dritten Vergleichsschwellwertes durch den Vergleichswert ein Alarmsignal generiert, insbesondere wobei der dritte Vergleichsschwellwert gleich dem ersten Vergleichsschwellwert ist, wobei das Alarmsignal vorzugsweise über einen zweiten Ausgang (10) ausgebbar ist.

5. Meßumformer nach einem der Ansprüche 1 bis 4, **dadurch gekennzeichnet, daß** die Auswerteeinheit (6) die Änderungsgeschwindigkeit des analogen Umformersignals und/oder des digitalen Umformersignals ermittelt und in Abhängigkeit von dem ermittelten Wert für die Änderungsgeschwindigkeit bzw. in Abhängigkeit von den ermittelten Werten für die Änderungsgeschwindigkeiten das elektrische Ausgangssignal generiert, insbesondere wobei die Änderungsgeschwindigkeit des analogen Umformersignals ermittelt wird und bei Überschreitung eines Änderungsgeschwindigkeitsschwellwertes durch die ermittelte Änderungsgeschwindigkeit das elektrische Ausgangssignal auf Basis des analogen Umformersignals generiert wird.

6. Meßumformer nach einem der Ansprüche 2 bis 5, **dadurch gekennzeichnet, daß** das analoge Umformersignal dem digitalen Übertragungspfad (5) zugeleitet wird, im digitalen Übertragungspfad (5) durch Vergleich des analogen Umformersignals mit dem digitalen Umformersignal ein weiterer Vergleichswert ermittelt und der weitere Vergleichswert der Auswerteeinheit (6) zugeleitet wird, insbesondere wobei die Auswerteeinheit (6) den weiteren, aus dem digitalen Übertragungspfad stammenden Vergleichswert mit dem in der Auswerteeinheit (6) selbst gebildeten Vergleichswert vergleicht und den so ermittelten Vergleichs-Vergleichswert zur Diagnose des Meßumformers, insbesondere zur Diagnose der Auswerteeinheit (6) selbst, heranzieht.

7. Meßumformer nach einem der Ansprüche 1 bis 6, **dadurch gekennzeichnet, daß** im analogen Übertragungspfad (4) und/oder im digitalen Übertragungspfad (5) der Wert wenigstens einer zur Kompensation von Umgebungseinflüssen benötigten Beeinflussungsgröße bereitgestellt und zur Kompensation des analogen Umformersignals und/oder des digitalen Umformersignals verwendet wird.

8. Meßumformer nach einem der Ansprüche 1 bis 8, **dadurch gekennzeichnet, daß** der Auswerteeinheit (6) der Wert wenigstens einer zur Kompensation von Umgebungseinflüssen benötigten Beeinflussungsgröße bereitgestellt und zur Kompensation der Umgebungseinflüsse des analogen Umformersignals und/oder des digitalen Umformersignals verwendet wird.

9. Meßumformer nach einem der Ansprüche 1 bis 8, **dadurch gekennzeichnet, daß** wenigstens eine weitere Auswerteeinheit vorgesehen ist, wobei die weitere Auswerteeinheit die Funktionalität der Auswerteeinheit (6) aufweist, wobei die beiden Auswerteeinheiten sich wechselseitig die ermittelten Auswertedaten - insbesondere die ermittelten Vergleichswerte - zuleiten und so ein fehlerhaftes Verhalten wenigstens einer der Auswerteeinheiten durch voneinander abweichende Auswertedaten feststellbar ist.

## Claims

1. Transducer for converting one input signal fed to a first input (2) into a corresponding electric output signal, which can be put out via at least one first output (3), wherein the input signal can be processed via an analog transmission path (4) into an analog converter signal
**characterized in,**
**that** the input signal can be additionally processed via a separate digital transmission path (5) into a digital converter signal, wherein the analog converter signal and the digital converter signal are evaluated by an evaluation unit (6) and the evaluation unit (6) generates the electric output signal either based on the analog converter signal or based on the digital converter signal.

2. Transducer according to claim 1, **characterized in that** the evaluation unit (6) determines a comparison value by comparing the analog converter signal with the digital converter signal and when a first comparison threshold value is exceeded by the comparison value, generates the electric output signal using the analog converter signal.

3. Transducer according to claim 1 or 2, **characterized in that** the evaluation unit (6) determines a comparison value by comparing the analog converter signal with the digital converter signal and generating the electric output signal using the comparison value based on the digital converter signal when a second comparison threshold value is not reached, in particular wherein the second comparison threshold value is smaller than the first comparison threshold so that a hysteretic effect is achieved.

4. Transducer according to any one of claims 1 to 3, **characterized in that** the evaluation unit determines a comparison value by comparing the analog converter signal with the digital converter signal and when a third comparison threshold value is exceeded by the comparison value, an alarm signal is generated, in particular wherein the third comparison threshold value is the same as the first comparison threshold value, wherein the alarm signal is preferably put out via a second output (10).

5. Transducer according to any one of claims 1 to 4, **characterized in that** the evaluation unit (6) determines the rate of change of the analog converter signal and/or of the digital converter signal and generates the electric output signal as a function of the determined value for the rate of change or, respectively, as a function of the determined values for the rates of change, in particular wherein the rate of change of the analog converter signal is determined and when the rate of change threshold value is not reached by the determined rate of change, the electric output signal is generated based on the analog converter signal.

6. Transducer according to any one of claims 2 to 5, **characterized in that** that the analog converter signal is supplied to the digital transmission path (5), a further comparison value is determined in the digital transmission path (5) by comparing the analog converter signal with the digital converter signal and the further comparison value is supplied to the evaluation unit (6), in particular wherein the evaluation unit (6) compares the further comparison value coming from the digital transmission path with the comparison value formed in the evaluation unit (6) itself and calls upon the comparison-comparison value determined in this manner for diagnosing the transducer, in particular for a diagnosis of the evaluation unit (6) itself.

7. Transducer according to any one of claims 1 to 6, **characterized in that** in the analog transmission path (4) and/or in the digital transmission path (5), the value of at least one influencing variable required for compensating environmental influences is provided and used to compensate the analog converter signal and/or the digital converter signal.

8. Transducer according to any one of claims 1 to 8, **characterized in that** the evaluation unit (6) is provided at least one value of the influencing variable required for compensating environmental influences and it is used for compensating the environmental influences on the analog converter signal and/or the digital converter signal.

9. Transducer according to any one of claims 1 to 8, **characterized in that** at least one further evaluation unit is provided, wherein the further evaluation unit has the functional ability of evaluation unit (6), wherein both evaluation units mutually supply each other with the determined evaluation data - in particular the determined comparison values - and, in this manner, an error-like behavior of at least one of the evaluation units can be determined using evaluation data deviating from one another.

## Revendications

1. Transducteur destiné à convertir un premier signal d'entrée appliqué à une première entrée (2) en un signal de sortie électrique correspondant pouvant être fourni en sortie par l'intermédiaire d'au moins une première sortie (3), dans lequel le signal d'entrée peut être traité en un signal de conversion analogique par l'intermédiaire d'un trajet de transmission analogique (4),
**caractérisé en ce que**
le signal d'entrée peut en outre être traité par l'intermédiaire d'un trajet de transmission numérique séparé (5) en un signal de transducteur numérique, dans lequel le signal de transducteur analogique et le signal de transducteur numérique sont évalués par une unité d'évaluation (6) et l'unité d'évaluation (6) génère le signal de sortie électrique soit sur la base du signal de transducteur analogique, soit sur la base du signal de transducteur numérique.

2. Transducteur selon la revendication 1, **caractérisé en ce que** l'unité d'évaluation (6) détermine une valeur de comparaison en comparant le signal de transducteur analogique au signal de transducteur numérique et génère le signal de sortie électrique lors d'un franchissement vers le haut d'une première valeur de seuil de comparaison par la valeur de comparaison sur la base du signal de transducteur analogique.

3. Transducteur selon la revendication 1 ou 2, **caractérisé en ce que** le dispositif d'évaluation (6) détermine une valeur de comparaison en comparant le signal de transducteur analogique au signal de transducteur numérique et génère le signal électrique lors d'un franchissement vers le bas d'une deuxième valeur de seuil de comparaison par la valeur de comparaison sur la base du signal de convertisseur numérique, la deuxième valeur de seuil de comparaison étant notamment inférieure à la première valeur de seuil de comparaison, de manière à obtenir un effet d'hystérésis.

4. Transducteur de mesure selon l'une quelconque des revendications 1 à 3, **caractérisé en ce que** l'unité d'évaluation détermine une valeur de comparaison en comparant le signal de transducteur analogique au signal de transducteur numérique et génère un signal d'alarme lors d'un franchissement vers le haut d'une troisième valeur de seuil de comparaison par la valeur de comparaison, la troisième valeur de seuil de comparaison étant notamment égale à la première valeur de seuil de comparaison, le signal d'alarme pouvant être de préférence délivré par l'intermédiaire d'une deuxième sortie (10).

5. Transducteur de mesure selon l'une quelconque des revendications 1 à 4, **caractérisé en ce que** l'unité d'évaluation (6) détermine la vitesse de variation du signal de transducteur analogique et/ou du signal de transducteur numérique et génère le signal de sortie électrique en fonction de la valeur déterminée pour la vitesse de variation ou en fonction des valeurs déterminées pour les vitesses de variation, la vitesse de variation du signal de transducteur analogique étant notamment déterminée et le signal de sortie électrique étant notamment généré lors d'un franchissement vers le haut d'une valeur de seuil de vitesse de variation par la vitesse de variation déterminée, sur la base du signal de transducteur analogique.

6. Transducteur de mesure selon l'une quelconque des revendications 2 à 5, **caractérisé en ce que** le signal de transducteur analogique est dirigé vers le trajet de transmission numérique (5), **en ce qu'**une autre valeur de comparaison est déterminée sur le trajet de transmission numérique (5) en comparant le signal de transducteur analogique au signal de transducteur numérique et **en ce que** l'autre valeur de comparaison est dirigée vers l'unité d'évaluation (6), l'unité d'évaluation (6) comparant notamment l'autre valeur de comparaison provenant du trajet de transmission numérique à la valeur de comparaison formée dans l'unité d'évaluation (6) elle-même et fait appel à la valeur de comparaison ainsi obtenue pour diagnostiquer le transducteur de mesure, et notamment pour diagnostiquer l'unité d'évaluation (6) elle-même.

7. Transducteur de mesure selon l'une quelconque des revendications 1 à 6, **caractérisé en ce que** la valeur d'au moins une grandeur ayant une influence, qui est nécessaire pour la compensation d'influences de l'environnement, est fournie sur le trajet de transmission analogique (4) et/ou sur le trajet de transmission numérique (5) et est utilisée pour compenser le signal de transducteur analogique et/ou le signal de transducteur numérique.

8. Transducteur de mesure selon l'une quelconque des revendications 1 à 8, **caractérisé en ce que** l'unité d'évaluation (6) fournit la valeur d'au moins une amplitude ayant une influence, qui est nécessaire pour la compensation des influences de l'environnement et est utilisée pour compenser les influences de l'environnement sur le signal de transducteur analogique et/ou le signal de transducteur numérique.

9. Transducteur de mesure selon l'une quelconque des revendications 1 à 8, **caractérisé en ce qu'**il est prévu au moins une autre unité d'évaluation, l'autre unité d'évaluation présentant la fonctionnalité de l'unité d'évaluation (6), les deux unités d'évaluation se transmettant mutuellement de manière alternée les données d'évaluation déterminées - notamment les valeurs de comparaison déterminées - pour ainsi pouvoir établir un comportement défectueux d'au moins l'une des unités d'évaluation sur la base de données d'évaluation s'écartant les unes des autres.
